# EUROPÄISCHE PATENTSCHRIFT

(11) **EP 1 055 277 B1**
(45) Veröffentlichungstag und Bekanntmachung des Hinweises auf die Patenterteilung: **15.08.2012**
(21) Anmeldenummer: 99941395.8
(22) Anmeldetag: 26.06.1999
(51) Int. Cl.: H02K 5/14, H01R 39/39

(54) **Leiterbahnen mit Kommutatorbürsten für eine elektrische Antriebseinheit für Fahrzeugaggregate**
Conductor strip with commutator brushes for an electric drive unit for units of a motor vehicle
Piste conductrice avec balais de collecteur pour une unité d'entrainement électrique destinée à des groupes de véhicule

(30) Priorität: 17.12.1998 DE 19858231
(43) Veröffentlichungstag der Anmeldung: 29.11.2000
(73) Patentinhaber: ROBERT BOSCH GMBH, 70442 Stuttgart (DE)
(72) Erfinder: LAUK, Detlef, D-77871 Renchen (DE); FISCHER, Ernst, D-76593 Gernsbach (DE); KARCHER, Hansjoerg, D-77830 Buehlertal (DE); HERP, Juergen, D-77815 Buehl (DE); MAURER, Erik, D-77830 Buehlertal (DE); WIEGERT, Andreas, D-77876 Kappelrodeck (DE); BOCK, Bernd, D-88416 Ochsenhausen (DE); HURST, Richard, D-77656 Offenburg (DE)
(86) Internationale Anmeldenummer: PCT/DE1999/001873
(87) Internationale Veröffentlichungsnummer: WO 2000/036728

(56) Entgegenhaltungen:
- DE-A- 4 430 953
- FR-A- 2 104 345
- US-A- 4 396 850
- PATENT ABSTRACTS OF JAPAN vol. 009, no. 291 (E-359), 19. November 1985 (1985-11-19) & JP 60 131058 A (MATSUSHITA DENKO KK), 12. Juli 1985 (1985-07-12)

## Beschreibung

### Stand der Technik

Die Erfindung geht aus von einer elektrischen Antriebseinheit für Fahrzeugaggregate, wie Fensterheber, Scheibenwischer od.dgl., der im Oberbegriff des Anspruchs 1 definierten Gattung.

Eine bekannte elektrische Antriebseinheit für Fensterheber in Kraftfahrzeugen (DE 90 13 006 U1) weist ein an das kommutatorseitige Ende des Kommutatormotors sich anschließendes Getriebegehäuse auf, in das die verlängerte Motorwelle als Getriebeantriebswelle (Schneckenwelle) hineinragt. In einem Elektronikgehäuse ist eine mit einem äußeren Anschlußstecker und Kommutatorbürsten sowie mit Bauelementen einer Motorelektronik elektrisch verbundene Leiterplatte angeordnet. Die Leiterplatte weist ein einstückiges Aufnahmeteil für die Bürstenhalterung und ein einstückiges Aufnahmeteil für den Anschlußstecker auf. Die elektrischen Anschlüsse der Bauelemente, der Bürsten und der Anschlußstecker sind mit den Leiterbahnen der Leiterplatte kontaktiert. Die Bürsten sind diametral am Kommutator angeordnet und jeweils in einem in der Bürstenhalterung ausgebildeten Köcher radial verschieblich gehalten. Das Elektronikgehäuse ist Bestandteil des Getriebegehäuses und durch einen mit dem Getriebegehäusedeckel einstückigen Elektronikgehäusedeckel verschlossen.

Aus der DE 44 30 798 A1 ist ein Stanzgitter aus Metallstreifen bekannt, die als Leiterbahnen zur Verbindung von Bauelementen dienen. Die Bauelemente sind auf dem Stanzgitter aufgebracht und ihre Anschlußbeinchen an das Stanzgitter angeschweißt oder angelötet. Als Beispiel für mögliche Bauelemente sind integrierte Schaltungen, Sensoren, Widerstände, Kondensatoren etc., angegeben. Das Stanzgitter mit darauf angebrachten Bauelementen ist mit Kunststoff umspritzt.

Aus der JP 60-131058 ist eine elektrische Antriebseinheit mit einem Kommutator und Hammerbürsten bekannt, in der die Hammerbürsten Trägerbleche aufweisen, die einstückig aus einem Blech herausgebogen sind.

### Vorteile der Erfindung

Die erfindungsgemäße elektrische Antriebseinheit für Fahrzeugaggregate mit den Merkmalen des Anspruchs 1 hat den Vorteil, daß alle elektrischen Bauelemente und stromführenden Verbindungen auf einem pro Motortyp standardisierten Stanzgitter konzentriert sind, das ein gutes Handling gewährleistet und definierte Schnittstellen zum Grundstecker besitzt. Die als Hammerbürsten ausgeführten Kommutatorbürsten sind einstückiger Bestandteil des Stanzgitters und müssen nicht gesondert montiert und verdrahtet werden. Der Montageaufwand für die Bürstenmontage entfällt. Die Trägerbleche der Hammerbürsten stellen gleichzeitig die Bürstenandruckkräfte am Kommutator zur Verfügung. Die Zuführung der Schleifkohle erfolgt von der vom Kommutator abgekehrten Rückseite der Trägerbleche her. Das vom Stanzgitter mit Bauelementen und Kommutatorbürsten gebildete Einheitsteil kann automatisch gefertigt, gut bestückt, automatisch geschweißt und leicht montiert werden.

### Zeichnung

Die Erfindung ist anhand eines in der Zeichnung dargestellten Ausführungsbeispiels in der nachfolgenden Beschreibung näher erläutert. Es zeigen jeweils in schematischer Darstellung:
- Fig. 1: einen Längsschnitt einer elektrischen Antriebseinheit für eine Scheibenwischer in Kraftfahrzeugen,
- Fig. 2: einen Schnitt längs der Linie II-II in Fig. 1.

### Beschreibung des Ausführungsbeispiels

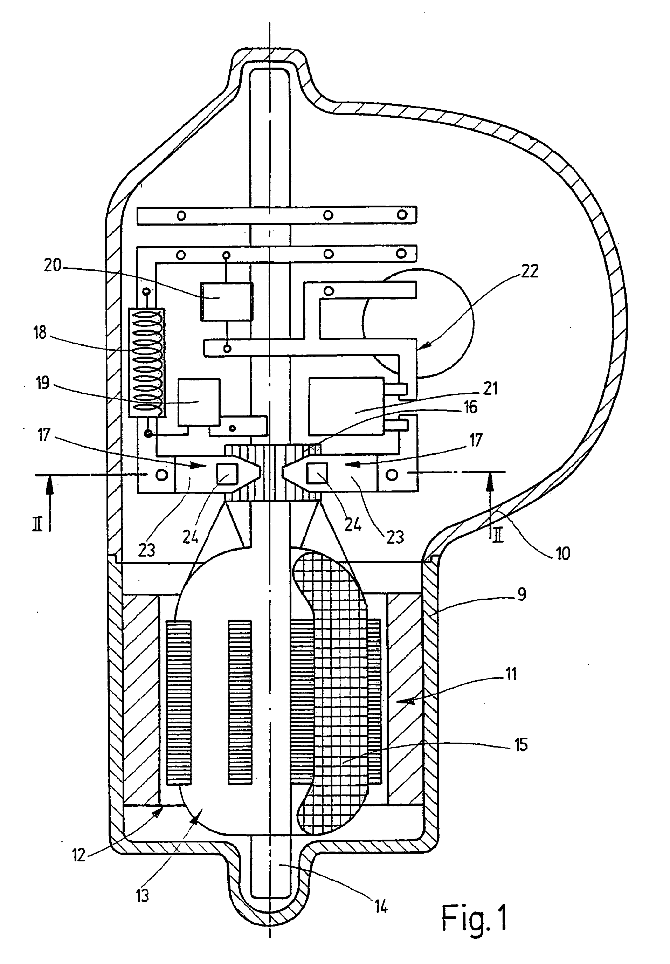

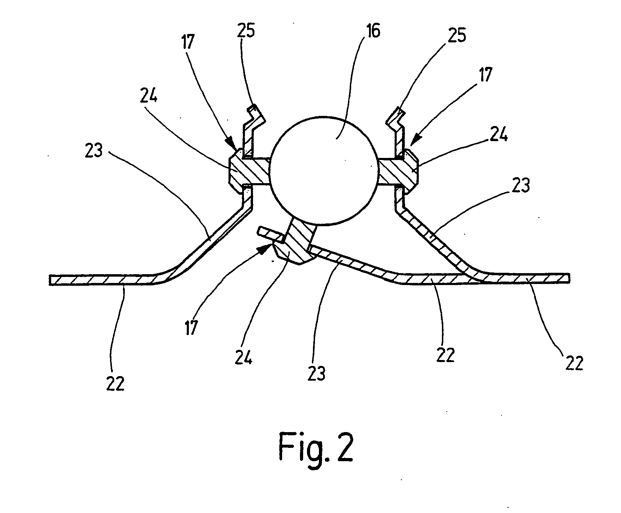

Die in Fig. 1 im Längsschnitt dargestellte elektrische Antriebseinheit für einen Scheibenwischer in Kraftfahrzeugen als Ausführungsbeispiel für ein allgemeines Fahrzeugaggregat weist ein Motorgehäuse 9 und ein daran angesetztes zweiteiliges Getriebegehäuse 10 auf, das aus einem Gehäuseunterteil und einem hier nicht dargestellten Gehäusedeckel besteht. In dem Motorgehäuse 9 ist ein Kommutatormotor 11 mit Stator 12 und Rotor 13 aufgenommen, dessen den Rotor 13 tragende verlängerte Rotorwelle 14 als Getriebeantriebswelle eines hier nicht dargestellten Getriebes in das Getriebegehäuse 10 hineinragt. Eine im Rotor 13 aufgenommene Rotorwicklung 15 ist mit den Kommutatorlamellen eines drehfest auf der Rotorwelle 14 sitzenden Kommutators 16 elektrisch leitend verbunden. Auf dem Umfang des Kommutators 16 sind Schleifkohlen 24 dreier Kommutatorbürsten 17 (Fig. 2) mit radialer Anpreßkraft aufgedrückt, die mit einem hier nicht dargestellten Anschlußstecker verbunden sind.

Zur Antriebseinheit gehören weiterhin elektrische Bauteile einer Motorelektronik, wie eine Entstördrossl 18, ein Entstörkondensator 19, eine Diode 20, ein Thermoschalter 21 sowie ggf. hier nicht dargestellte Widerstände. Alle diese elektrischen Bauteile 18 - 21 sind auf einem Stanzgitter 22 aus elektrisch leitendem Material befestigt, das die elektrischen Verbindungen zwischen den einzelnen Bauteilen und dem Kommutatormotor 11 bzw. den Kommutatorbürsten 17 herstellt. Das Stanzgitter 22, auch lead frame genannt, ist in dem Getriebegehäuse 10 integriert und im Ausführungsbeispiel in den Gehäusedeckel eingelegt und durch Ultraschallschweißen oder Warmverstemmung von hierfür vorgesehene Positionszapfen am Gehäusedeckel befestigt. Das Stanzgitter 22 kann auch in gleicher Weise mit dem ebenfalls aus Kunststoff bestehenden Gehäuseunterteil fest verbunden werden. Die elektrische und mechanische Verbindung der Bauteile 18 - 21 mit dem Stanzgitter 22 erfolgt durch Aufschweißen der an den Bauteilen 18 - 21 vorstehenden Beinchen auf die Metallstege des Stanzgitters 22, was z.B. mittels Laserschweißen möglich ist.

Wie insbesondere aus der Schnittdarstellung in Fig. 2 zu erkennen ist, sind die Kommutatorbürsten 17 als sog. Hammerbürsten ausgebildet, bei denen jeweils eine Schleifkohle 24 von einem Federhebel oder Trägerblech 23 gehalten wird, das gleichzeitig die radiale Anpreßkraft für die Schleifkohle 24 an den Kommutator 16 aufbringt. Jedes Trägerblech 23 ist dabei einstückig aus dem Stanzgitter 22 herausgebogen, und die Schleifkohlen 24 sind von der von dem Kommutator 16 abgekehrten Rückseite der Trägerbleche 23 her in entsprechende Aussparungen in den Trägerblechen 23 eingesetzt und z.B. mittels nicht dargestellter Laschen axial unverschieblich festgelegt. Die insgesamt drei Kommutatorbürsten 17, die alle in gleicher Weise als Hammerbürsten ausgebildet sind, ermöglichen den Betrieb des Kommutators 11 in zwei Drehzahlstufen. Zur Erleichterung der Montage ist an den freien Enden der Trägerbleche 23 der beiden einander diametral gegenüberliegenden Kommutatorbürsten 17 jeweils eine Fügungshilfe 25 in Form einer zum Kommutator 16 hin vorspringenden abgewinkelten Führungsnase ausgebildet. Beim Aufsetzen des Gehäusedeckels gleiten diese Fügungshilfen 25 über den Kommutator 16 und erleichtern somit das Aufschieben der Kommutatorbürsten 17.

In der Regel weist die für einen Scheibenwischer konzipierte Antriebseinheit noch einen Endlagenschalter zum Abschalten des Kommutatormotors 11 in der sog. Parklage des Scheibenwischers auf. Der hier nicht dargestellte Endlagenschalter wird mittels eines Schleifkontakts realisiert, der in der Parklage des Scheibenwischers die Stromzufuhr zu dem Kommutatormotor unterbricht. Die mit dem Schleifkontakt zusammenwirkende Schleifkontaktfeder wird dann ebenfalls einstückig aus dem Stanzgitter 22 herausgebogen.

## Patentansprüche

1. Elektrische Antriebseinheit für Fahrzeugaggregate mit einem einen Kommutator (16) und mindestens zwei als Hammerbürsten ausgebildete Kommutatorbürsten (17) aufweisenden Kommutatormotor (11) und mit elektrischen Bauteilen (18 - 21) einer Motorelektronik, wobei
die elektrischen Bauteile (18 - 21) auf einem die elektrische Verbindung zwischen den Bauteilen (18 - 21) und dem Kommutatormotor (11) herstellenden Stanzgitter (22) befestigt sind, und dass die Hammerbürsten Trägerbleche (23) aufweisen, die aus dem Stanzgitter (22) einstückig herausgebogen sind, **dadurch gekennzeichnet, dass** die Antriebseinheit ferner ein der Rotorwelle (14) des Kommutatormotors (11) nachgeordnetes, in einem Getriebegehäuse (10) aufgenommenes Getriebe aufweist,
und das mit den Bauelementen (18 - 21) bestückte Stanzgitter (22) in dem Getriebegehäuse (10) integriert ist.

2. Antriebseinheit nach Anspruch 1, **dadurch gekennzeichnet, daß** das aus Kunststoff gefertigte Getriebegehäuse (10) zweiteilig ist und aus einem Gehäuseunterteil und einem Gehäusedeckel besteht und daß das Stanzgitter (22) in dem Gehäuseunterteil oder dem Gehäusedeckel eingelegt und mit diesem fest verbunden ist.

3. Antriebseinheit nach Anspruch 2, **dadurch gekennzeichnet, daß** die Verbindung von Stanzgitter (22) und Gehäuseunterteil bzw. Gehäusedeckel durch Ultraschallschweißen oder Warmverstemmung von am Getriebegehäuse (10) angeformten Positionszapfen vorgenommen ist.

4. Antriebseinheit nach einem der Ansprüche 1 - 3, **dadurch gekennzeichnet, daß** an den Trägerblechen (23) der Hammerbürsten jeweils eine Fügungshilfe (25) für das Aufschieben der Hammerbürsten (17) auf den Kommutator (16) ausgebildet ist.

5. Antriebseinheit nach einem der Ansprüche 1 - 4 mit einem Endlagenschalter zum Abschalten des Kommutatormotors (11) in einer definierten Endlage des Fahrzeugaggregats, **dadurch gekennzeichnet, daß** der Endlagenschalter eine Schleifkontaktfeder aufweist, die aus dem Stanzgitter (22) einstückig herausgebogen ist.

## Claims

1. Electric drive unit for vehicle assemblies, having a commutator motor (11) which has a commutator (16) and at least two commutator brushes (17) which are in the form of hammer brushes, and having electrical components (18-21) of a motor electronics system, with the electrical components (18-21) being mounted on a stamped grid (22) which establishes the electrical connection between the components (18-21) and the commutator motor (11), and with the hammer brushes having support plates (23) which are integrally bent out of the stamped grid (22), **characterized in that** the drive unit also has a gear mechanism which is arranged downstream of the rotor shaft (14) of the commutator motor (11) and is accommodated in a gear mechanism housing (10), and the stamped grid (22) which is fitted with the components (18-21) is integrated in the gear mechanism housing (10).

2. Drive unit according to Claim 1, **characterized in that** the gear mechanism housing (10) which is produced from plastic has two parts and comprises a housing lower part and a housing cover, and **in that** the stamped grid (22) is inserted into the housing lower part or the housing cover and is firmly connected to the said housing lower part or housing cover.

3. Drive unit according to Claim 2, **characterized in that** the connection between the stamped grid (22) and housing lower part or housing cover is established by ultrasound welding or hot-caulking positioning pins which are integrally formed on the gear mechanism housing (10).

4. Drive unit according to one of Claims 1-3, **characterized in that** in each case one joining aid (25) for pushing the hammer brushes (17) onto the commutator (16) is formed on the support plates (23) of the hammer brushes.

5. Drive unit according to one of Claims 1-4, having an end position switch for switching off the commutator motor (11) in a defined end position of the vehicle assembly, **characterized in that** the end position switch has a sliding contact spring which is integrally bent out of the stamped grid (22).

## Revendications

1. Unité d'entraînement électrique pour des groupes d'un véhicule, comprenant un moteur à collecteur (11) présentant un collecteur (16) et au moins deux balais de collecteur (17) réalisés sous forme de balais à marteau et comprenant des composants électriques (18 - 21) d'une électronique du moteur,
les composants électriques (18 - 21) étant fixés sur une grille estampée (22) établissant la connexion électrique entre les composants (18 - 21) et le moteur à collecteur (11), et les balais à marteau présentant des tôles de support (23) qui sont ressorties par cintrage d'une seule pièce hors de la grille estampée (22), **caractérisée en ce que** l'unité d'entraînement présente en outre une transmission disposée en aval de l'arbre de rotor (14) du moteur à collecteur (11) et reçue dans un boîtier de transmission (10), et la grille estampée (22) munie des composants (18 - 21) est intégrée dans le boîtier de transmission (10).

2. Unité d'entraînement selon la revendication 1, **caractérisée en ce que** le boîtier de transmission (10) fabriqué en plastique est en deux parties et se compose d'une partie inférieure de boîtier et d'un couvercle de boîtier et **en ce que** la grille estampée (22) est introduite dans la partie inférieure de boîtier ou le couvercle de boîtier et est connectée fixement à celle-ci ou celui-ci.

3. Unité d'entraînement selon la revendication 2, **caractérisée en ce que** la connexion de la grille estampée (22) à la partie inférieure de boîtier ou au couvercle de boîtier s'effectue par soudage par ultrasons ou par matage à chaud de tourillons de positionnement façonnés sur le boîtier de transmission (10).

4. Unité d'entraînement selon l'une quelconque des revendications 1 à 3, **caractérisée en ce qu'**un auxiliaire d'assemblage (25) pour l'enfoncement des balais à marteau (17) sur le collecteur (16) est réalisé à chaque fois sur les tôles de support (23) des balais à marteau.

5. Unité d'entraînement selon l'une quelconque des revendications 1 à 4, comprenant un commutateur de fin de course pour déconnecter le moteur à collecteur (11) dans une position de fin de course définie du groupe du véhicule, **caractérisée en ce que** le commutateur de fin de course présente un ressort à contact frottant qui est ressorti par cintrage d'une seule pièce hors de la grille estampée (22).
